# EUROPEAN PATENT SPECIFICATION

(11) **EP 2 199 904 B1**
(45) Date of publication and mention of the grant of the patent: **11.11.2015**
(21) Application number: 09011215.2
(22) Date of filing: 01.09.2009
(51) Int. Cl.: G06F 17/30, G06F 9/44

(54) **Flexible multi-tenant support of metadata extensions**
Flexible Mehrinhaberunterstützung von Metadatenerweiterungen
Support flexible partagé d'extensions de métadonnées

(30) Priority: 19.12.2008 US 339392
(43) Date of publication of application: 23.06.2010
(73) Proprietor: SAP SE, 69190 Walldorf (DE)
(72) Inventor: Eberlein, Peter, 69190 Walldorf (DE); Baeuerle, Stefan A., 69190 Walldorf (DE); Said, Bare, 69190 Walldorf (DE)
(74) Representative: Müller-Boré & Partner Patentanwälte PartG mbB

(56) References cited:
- WO-A-2005/098593
- WILLIS G: "Architecture SIG - February 2007" INTERNET ARTICLE, [Online] February 2007 (2007-02), pages 1-44, XP002552304 Retrieved from the Internet: URL:http://www.acs.org.au/nsw/sigs/archite cture/Architecture-200702.pdf> [retrieved on 2009-10-26]
- TAYLOR M ET AL: "Data Integration and Composite Business Services, Part 3: Build a multi-tenant data tier with access control and security" INTERNET ARTICLE, [Online] 13 December 2007 (2007-12-13), pages 1-16, XP002552301 Retrieved from the Internet: URL:http://www.ibm.com/developerworks/data /library/techarticle/dm-0712taylor/> [retrieved on 2009-10-26]

## Description

### FIELD

Some embodiments relate to business objects supported by a business process platform. More specifically, some embodiments relate to the support of client-specific extension fields for business objects within a multi-tenant business process platform.

### BACKGROUND

A business object is a software model representing real-world items used during the transaction of business. For example, a business object model may represent a business document such as a sales order, a purchase order, or an invoice. A business object model may also represent master data objects such as a product, a business partner, or a piece of equipment. Particular documents (e.g., SalesOrder S0435539) and/or master data objects (e.g., ACME corporation) are represented by instances of their associated business object model, or business object instances.

A business object model includes metadata which specifies the structure of business logic and/or business data within corresponding business object instances. The metadata of a business object model may be determined based on the requirements of a business scenario in which the business object model is to be deployed. A business solution for a particular business scenario may include many business object models, where the metadata of each business object model has been determined based on the requirements of the particular business scenario.

A client deploying a business solution may desire changes to the business object models included in the business solution. For example, a client may require a field (e.g., "SeriaINumber") which does not exist within the "Product" business object model of a business solution. Conventional techniques for adding a field to an existing business object model include APPEND mechanisms which change the definition of the business object model at the data dictionary level. An entire database system must be recompiled to effect such a change, and the change occurs globally with respect to all instantiations of the business object model within the system. Moreover, the change may require reprogramming of application clients which interact with the changed business object model.

In some scenarios, particularly "software-as-α-service" scenarios, multiple clients (tenants) receive services from a single application platform. Multi-tenant support may reduce a total cost of ownership so that such services may be offered at competitive prices. However, individual tenants may desire different changes to the business object models of the application platform as described above. Unfortunately, if one of the multiple tenants adds an extension field to a business object using a conventional technique as described above, each other tenant would be forced to adapt to the additional extension field.

Improved systems for adding tenant-specific extensions to business object models are desired.

Document G. Willis "Architecture SIG- February 2007", relates to a software as a service architecture for enabling software delivery over the Internet to one or more clients. In particular, the document describes a method for supporting client-specific extensions in a multi-tenant platform, however, uses a separate database table for specifying extension metadata.

Hence, it is a problem how to add client-specific extensions to an object model in a flexible and efficient manner.

### SUMMARY

The present invention relates to a computer-implemented method and a system as claimed in the independent claims. Preferred embodiments are defined in the dependent claims.

In particular, contrary to the above the document G. Willis "Architecture SIG-February 2007", the present invention implements a method for supporting client-specific extensions in a multi-tenant platform, wherein client-independent metadata and extension metadata are specified in a single database table, referred to as a metadata persistency table.

### BRIEF DESCRIPTION OF THE DRAWINGS

FIG. 1 is a block diagram of a system architecture according to some embodiments.
FIG. 2 is a tabular representation of a portion of a metadata repository according to some embodiments.
FIG. 3 is a flow diagram of a process according to some embodiments.

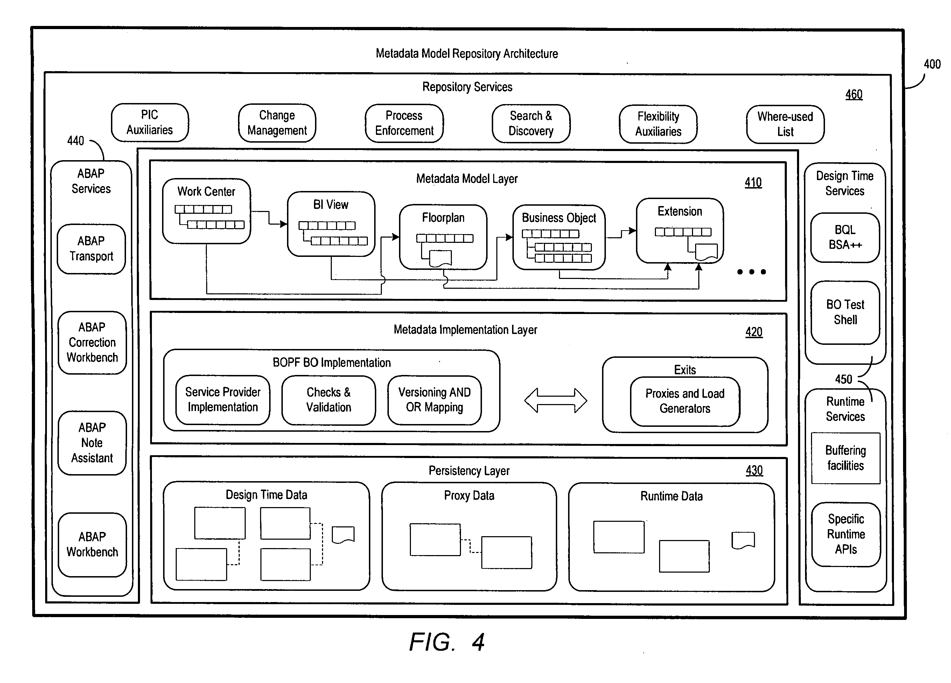

FIG. 4 is a detailed block diagram illustrating a metadata repository architecture according to some embodiments.
FIG. 5 is a diagram of a meta-metadata model according to some embodiments.
FIG. 6 is a flow diagram of a process according to some embodiments.

### DETAILED DESCRIPTION

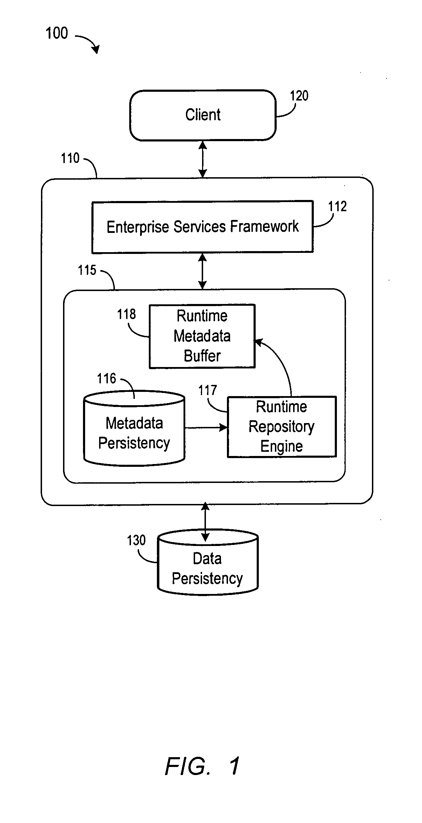

FIG. 1 is a block diagram of system 100 according to some embodiments. System 100 includes business process platform 110 for providing services to client 120 according to some embodiments. Business process platform 110 may comprise the Application Platform provided by SAP of Walldorf, Germany and based on SAP Netweaver®, but is not limited thereto. In this regard, FIG. 1 represents a logical architecture for describing systems and processes according to some embodiments. The architecture may be implemented using any arrangement of hardware devices, data structures, and program code.

Client 120 may comprise any suitable device. For example, the device may include any necessary software to support a proprietary interface (e.g., a proprietary client application) or execution engine (e.g., a Web browser). Client 120 is also capable of communication (including sporadic communication - e.g., mobile devices) with business process platform 110.

More specifically, client 120 may use application programming interfaces exposed by enterprise services framework 112 to request read and write access to business object instances stored in data persistency 130. The business object instances are instances of corresponding business object models. Metadata repository 115 provides metadata of the business object models to describe the structure and attributes of instances thereof. Enterprise services framework 112 therefore uses metadata provided by metadata repository 115 to access business object instance data stored in data persistency 130.

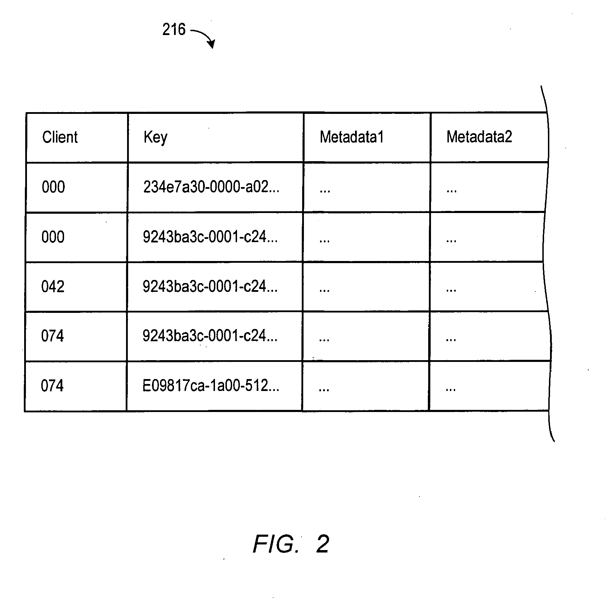

Metadata repository 115 includes metadata persistency 116, runtime repository engine 117 and runtime metadata buffer 118. During runtime, runtime repository 117 populates runtime metadata buffer 118 based on metadata stored in metadata persistency 116. FIG. 2 is a tabular representation of a portion of metadata persistency 216 according to some embodiments.

For a given row of persistency 216, the Client column identifies whether the row includes client-independent metadata and, if not, specifies a client with which the metadata of the row is associated. A Client value of "000" indicates client-independent metadata. Other Client values relate to specific clients (i.e., tenants), which may represent a particular business, industry, user, etc.

The Key column of a given row identifies an object model associated with the row. That is, the values of the Metadata columns of the given row represent metadata of the object model identified by the Key column. If the value of the Client column of the given row is "000", then the values of the Metadata columns of the given row represent client-independent metadata of the object model. If the value of the Client column of the given row is not "000", then the values of the Metadata columns of the given row represent client-specific metadata of the object model. Client-specific metadata of the object model which differs from the client-independent metadata of the same object model may be referred to as extension metadata.

According to some embodiments, client-specific rows of persistency 216 (i.e., rows having a Client value other than "000") include only extension metadata. That is, the client-specific rows include only metadata of the object model identified in the Key column that differs from client-independent metadata associated with the same object model. In other words, only the changes that a client desires to client-independent object model metadata are stored in a row which is associated with the client and with the object model.

As shown, more than one client (i.e., "042" and "074") may be associated with client-specific metadata of a same object model (i.e., 9243ba3c-0001-c24...). Metadata persistency 216 therefore separates the extension metadata of each tenant from one another and from client-independent object model metadata.

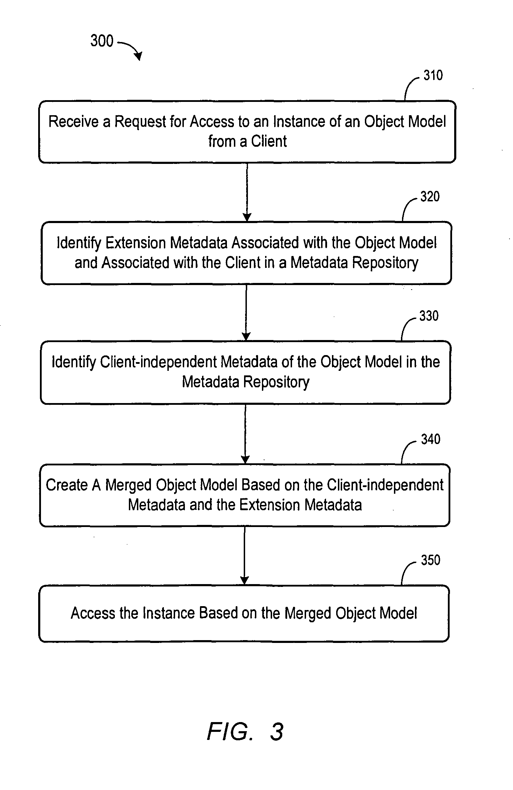

FIG. 3 is a flow diagram of process 300 to utilize such a metadata persistency according to some embodiments. Process 300 may be embodied in processor-executable program code and executed by runtime repository engine 117 of architecture 100, but embodiments are not limited thereto.

Initially, at 310, a request for access to an instance of an object model is received from a client. In one example of 310, enterprise services framework 112 receives a request to create, change or store an instance (e.g., SalesOrder SO435539) of an object model (e.g., SalesOrder) from client 120. Client 120 may issue the request using an application programming interface exposed by framework 112.

Extension metadata of a metadata repository is identified at 320 in response to the received request. The extension metadata is associated with the object model and is also associated with the client from whom the request was received. Continuing with the present example, metadata repository 115 is notified of the request and, in response, runtime repository engine 117 identifies the extension metadata from metadata persistency 116. More particularly, and with reference to the embodiment of FIG. 2, runtime engine 117 identifies metadata of a row which is associated with a Client value identifying the client and a Key value identifying the object model. For security reasons, a different instantiation of runtime repository engine 117 may be dedicated to each client serviced by platform 110.

Next, at 330, client-independent metadata of the object model is identified in the metadata repository. Turning again to FIG. 2, runtime repository engine 117 may identify metadata of a row of repository persistency 216 which is associated with a Client value "000" and with a Key value identifying the object model.

A merged object model is created at 340 based on the client-independent metadata and the extension data. Runtime repository engine 117 may create the merged object model at 340 by overlaying the identified extension metadata upon the identified client-independent metadata. Such overlaying may facilitate replacing portions of client-independent metadata with corresponding portions of extension metadata where the portions differ, as well as adding portions of extension metadata for which no corresponding client-independent metadata exists. Runtime repository engine 117 may store the merged object model in runtime metadata buffer 118.

Next, at 350, the instance of the object model is accessed based on the merged object model. Enterprise services framework 112 may use conventional techniques to access the instance from data persistency 130 based on the corresponding merged object model stored in runtime metadata buffer 118. In this regard, enterprise services framework 112 need not be aware of the client-independent metadata/extension metadata distinction.

Although the foregoing description refers to metadata of business object models, embodiments are not limited thereto. More specifically, embodiments may facilitate client-specific extensions of any object model metadata. For example, a metadata model repository such as that described in commonly-assigned, co-pending U.S. Patent Application Serial. No. (Attorney Docket No. 2008P00270US), may be employed in conjunction with some embodiments to support client-specific extension models used to describe any development entity.

Metadata model repository architecture 400 includes metadata model layer 410 including metadata models describing, respectively, generic models of a work center, a BI view, a floorplan (i.e., a user interface layout), a business object, and an extension. An instance of the business object metadata model, for example, may comprise a SalesOrder object model as described above. Moreover, an instance of the extension metadata model may comprise a SalesOrderExtension object model. The metadata models of layer 410 may be embodied in any type of data structure, including but not limited to extensible Markup Language files. Other metadata models that may reside in metadata model layer 410 may describe, for example, UI texts and process components, but embodiments are not limited thereto.

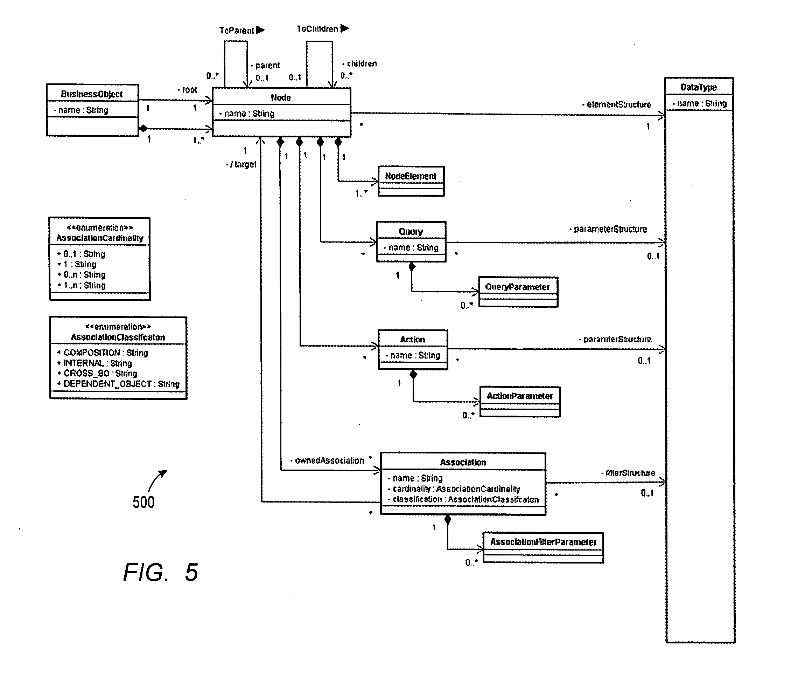

Each of the metadata models of layer 410 may comprise an instance of a same meta-metadata model. The meta-metadata model may consist of nodes, composite associations, associations, elements structure and attribute properties. FIG. 5 is a diagram of meta-metadata model 500 according to some embodiments. Meta-metadata model 500 may be identical to the business object metadata model of layer 410, such that the business object metadata model is an instance of itself.

Because the metadata models of layer 410 share a common parent model, the development of specific BI view models, specific floorplan models, specific business object models and specific extension object models may proceed using the same development technologies, thereby facilitating integration of the various specific object models. As mentioned above, existing tools which support development, transactions and lifecycle management of instances (e.g., SalesOrder SO435539) of a specific business object model (e.g., SalesOrder) may also be used to support development, transactions and lifecycle management of instances (i.e., specific object models) of any of the metadata models of layer 410.

As illustrated, the metadata models of metadata model layer 410 may include one or more associations to another metadata model. For example, an instance of a business object metadata model (e.g., a SalesOrder object model) may include an association to an instance of an extension metadata model (e.g., a SalesOrderExtension object model).

Metadata implementation layer 420 includes a business object processing framework (BOPF) to implement specific object models derived from the metadata models of layer 410. Layer 420 may manage model instance persistencies as well as a lifecycle thereof. The BOPF may also implement model consistency constraints as is known. Architecture 400 may therefore provide the capability to create, change and store different object models (as opposed to only the instances thereof) and to support their lifecycle management (e.g., shipment, change management, versioning).

The BOPF of metadata implementation layer 420 may generate appropriate database tables in persistency layer 430 to store data structures representing the specific object models derived from the metadata models of layer 410. As in the conventional storage of object instance data, the data structures representing the specific object models may be stored in database tables and/or any other suitable format. Available database tables (e.g., optimized database tables or proxy data) may also be used and connected to the BOPF business object implementation. A persisted repository object model may also include unstructured data that may be referenced.

ABAP services 440 represent a generic connection to ABAP services provided for all instances (i.e., object models) derived from the repository metadata models. Such services may include transport and correction tools and an ABAP development workbench. ABAP services 440 may be similar to corresponding ABAP services currently provided for business object instances.

Access layer 450 provides uniform mechanisms to access repository object models. For example, Business Query Language/BSA++ may be used to access design time aspects of the object models. During runtime, access layer may provide specific performance-optimized application programming interfaces and buffering facilities.

Repository services 460 also reflect services that may be conventionally available with respect to object model instances, but not with respect to object models themselves. For example, process enforcement services may use "status and action management" as well as business management tasks.

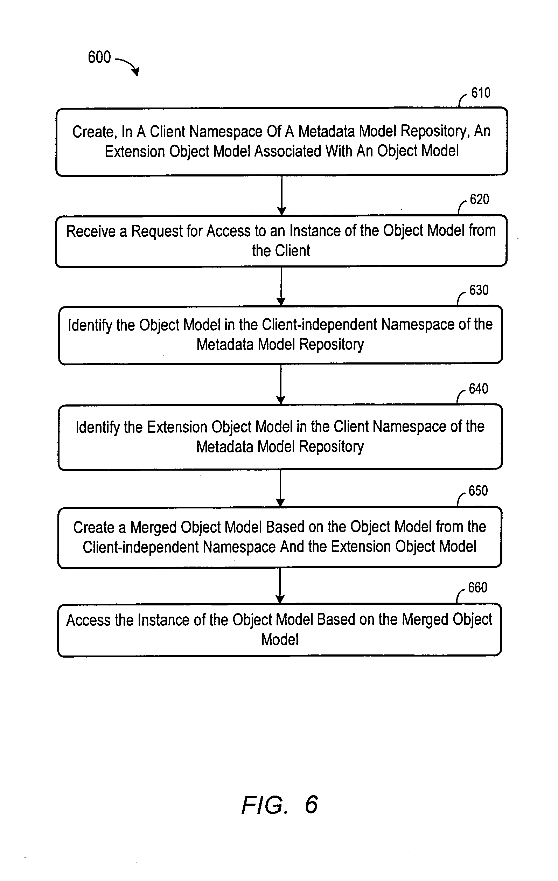

FIG. 6 is a flow diagram of process 600 to provide client-specific metadata extensions using a model-based metadata repository according to some embodiments. Process 600 may comprise a specific implementation of process 330, but embodiments are not limited thereto.

An extension object model is created in a namespace of a metadata model repository associated with a client at 610. The extension object model may comprise an instance of the extension metadata model of metadata model layer 410. The extension object model includes metadata that associates the extension object model with an object model. As mentioned above, the associated object model may comprise a business object model (e.g., SalesOrder) or a model of any other type of entity (e.g., work center, BI view, floorplan, etc.). The extension object model (e.g., SalesOrderExtension) may include a reference to the associated object model, and may include only metadata comprising the delta between the unextended and the extended object model.

According to an example of 610, the extension object model is developed by a client and stored in the Namespace http://client042.com of persistency layer 430 as SalesOrderClient042Extension. The stored extension object model may include a reference to the SalesOrder object model stored in the Namespace http://sap.com of persistency layer 430. In this example, client-independent object models are stored in the Namespace http://sap.com of persistency layer 430.

It should be noted that a partner, or independent software vendor, may develop an extension object model based on the extension metadata model of layer 410. The extension object model may be deployed within a client-independent Namespace (e.g., http://sap.com, "client 000") of a system or in a client-specific Namespace (e.g., http://client042.com, "client "042") of the system. The extension object model is available to all tenants of the system if it is deployed in the client-independent Namespace, and is available only to a specific client if deployed in the client-specific Namespace.

Next, at 620, a request for access to an instance of the object model is received from the client. For example, metadata model repository architecture 400 may receive a request to create, change or store the instance via an application programming interface of runtime services 450. The object model is then identified in the client-independent namespace of the metadata model repository at 640.

The extension object model is identified in the client-specific Namespace at 640. More specifically, the client-specific Namespace is searched for all extension object models (i.e., more than one may exist) which are associated with the object model to be extended. As described with respect to FIG. 2, the association may comprise a Key identifying the object model to be extended.

As described above, the client-independent namespace may also include an extension object model which is associated with the object model to be extended. This extension object model may have been developed by a partner and deployed for use by all system tenants. Any client-independent extension object models which are associated with the object model to be extended may also be identified at 650 in some embodiments.

A merged object model is then created at 650 based on metadata of the identified extension object model(s) and metadata of the object model identified in the client-independent namespace. The merged object model may be created by overlaying the metadata of the extension model(s) on the metadata of the object model. The merged object model may therefore incorporate aspects of the unextended object model (e.g., SalesOrder object model) and of all the extension object models of the client-specific Namespace and the client-independent Namespace which are associated with the unextended object model. The merged object model may be stored in a runtime portion of persistency layer 430.

The instance of the object model is accessed based on the merged object model at 660. The access may employ conventional techniques to access stored data based on a model of the stored data. In a multi-tenant system, the data is stored in a client-specific manner. Security measures may be employed at any point of process 600 to determine whether the requesting client possesses the permissions necessary to access the client-specific data.

Each system described herein may be implemented by any number of devices in communication via any number of other public and/or private networks. Two or more of devices of may be located remote from one another and may communicate with one another via any known manner of network(s) and/or a dedicated connection. Moreover, each device may comprise any number of hardware and/or software elements suitable to provide the functions described herein as well as any other functions. Other topologies may be used in conjunction with other embodiments.

All systems and processes discussed herein may be embodied in program code stored on one or more computer-readable media. Such media may include, for example, a floppy disk, a CD-ROM, a DVD-ROM, a Zip™ disk, magnetic tape, and solid state RAM or ROM memories. Embodiments are therefore not limited to any specific combination of hardware and software.

The embodiments described herein are solely for the purpose of illustration. Those in the art will recognize other embodiments may be practiced with modifications and alterations limited only by the claims.

## Claims

1. A computer-implemented method for supporting client-specific extensions within a multi-tenant platform comprising:
receiving (310), from a client device (120) operated by a client, the client being a tenant of the multi-tenant platform, and using an application programming interface exposed by the framework (112), a request for access to an instance of an object model, the instance being stored in a data persistency (130), wherein the framework (112) uses metadata of the object model describing the structure and attributes of the instance thereof and being provided by a metadata repository (115) to access data of the instance stored in the data persistency (130);
identifying (320), in a metadata persistency (116) being a database table of the metadata repository (115), extension metadata stored in a row of the metadata persistency (116) which is associated with the object model and with the client
identifying (330), in the metadata persistency (116) being a database table of the metadata repository (115), client-independent metadata of the object model stored in a row of the metadata persistency (116);
merging (340) the client-independent metadata and the extension metadata associated with the client to create a merged object model by overlaying the identified extension metadata upon the identified client-independent metadata to replace portions of the client-independent metadata with corresponding portions of the extension metadata where the portions differ and to add portions of the extension metadata for which no corresponding client-independent metadata exists; and
accessing (350) the instance of the object model from the data persistency (130) based on the corresponding merged object model for the instance,
wherein for each row in the metadata persistency (116) a client value "000" indicates client-independent metadata and a client value other than "000" indicates extension metadata associated to the client specified by the client value, so that the extension metadata of the client is separated from extension metadata of another client and from the client-independent metadata in the metadata persistency (116).

2. A method according to Claim 1, further comprising storing the merged object model in a runtime metadata buffer.

3. A system comprising:
a metadata repository (115);
a persistent storage to store instances of a plurality of object models;
executable program code which when loaded and run in the system, causes the system to perform operations according to a method of any one of the preceding claims.

## Patentansprüche

1. Computerimplementiertes Verfahren zum Unterstützen von clientspezifischen Erweiterungen innerhalb einer Mehrinhaberplattform, umfassend:
Empfangen (310) einer Anforderung für den Zugriff auf eine Instanz eines Objektmodells, wobei die Instanz in einer Datenpersistenz (130) gespeichert ist, von einer Client-Vorrichtung (120), die durch einen Client betrieben wird, wobei der Client ein Inhaber der Mehrinhaberplattform ist und eine Anwendungsprogrammierschnittstelle verwendet, die durch das Framework (112) gezeigt wird, wobei das Framework (112) Metadaten des Objektmodels verwendet, die die Struktur und Attribute der Instanz davon beschreiben und durch ein Metadatenarchiv (115) bereitgestellt werden, um auf Daten der Instanz zuzugreifen, die in der Datenpersistenz (130) gespeichert sind;
Identifizieren (320) von Erweiterungsmetadaten, die in einer Zeile einer Metadatenpersistenz (116) gespeichert sind, die dem Objektmodell und dem Client zugehörig sind, in der Metadatenpersistenz (116), die eine Datenbanktabelle des Metadatenarchivs (115) ist;
Identifizieren (330) von client-unabhängigen Metadaten des Objektmodells, die in einer Zeile der Metadatenpersistenz (116) gespeichert sind, in der Metadatenpersistenz (116), die eine Datenbanktabelle des Metadatenarchivs (115) ist;
Mergen (340) der client-unabhängigen Metadaten und der Erweiterungsmetadaten, die dem Client zugehörig sind, um ein gemergtes Objektmodell durch Überlagern der identifizierten Erweiterungsmetadaten auf den identifizierten client-unabhängigen Metadaten zu erzeugen, um Abschnitte der client-unabhängigen Metadaten mit entsprechenden Abschnitten der Erweiterungsmetadaten zu ersetzen, wo die Abschnitte sich unterscheiden, und Abschnitte der Erweiterungsmetadaten hinzuzufügen, für die keine entsprechenden client-unabhängigen Metadaten vorhanden sind; und
Zugreifen (350) auf die Instanz des Objektmodells von der Datenpersistenz (130) auf der Grundlage des entsprechenden gemergten Objektmodells für die Instanz,
wobei für jede Zeile in der Metadatenpersistenz (116) ein Client-Wert "000" client-unabhängige Metadaten anzeigt und ein Client-Wert, der sich von "000" unterscheidet, Erweiterungsmetadaten anzeigt, die dem durch den Client-Wert angegebenen Client zugehörig sind, derart, dass die Erweiterungsmetadaten des Clients von Erweiterungsmetadaten eines anderen Clients und von den clientunabhängigen Metadaten in der Metadaten-Persistenz (116) getrennt sind.

2. Verfahren nach Anspruch 1, überdies umfassend das Speichern des gemergten Objektmodells in einem Laufzeit-Metadatenpuffer.

3. System, umfassend:
ein Metadatenarchiv (115);
einen persistenten Speicher zum Speichern von Instanzen einer Vielzahl von Obj ektmodellen;
ausführbaren Programmcode, der, wenn er geladen und in dem System ausgeführt wird, bewirkt, dass das System Operationen gemäß einem Verfahren nach einem der vorhergehenden Ansprüche durchführt.

## Revendications

1. Procédé mis en oeuvre par ordinateur pour supporter des extensions spécifiques à un client à l'intérieur d'une plateforme partagée, comprenant :
la réception (310), en provenance d'un dispositif de client (120) exploité par un client, le client étant un locataire de la plateforme partagée, et à l'aide d'une interface de programmation d'application exposée par le framework (112), une demande pour accéder à un exemplaire d'un modèle objet, l'exemplaire étant stocké dans une persistance des données (130), dans lequel le framework (112) utilise des métadonnées du modèle objet décrivant la structure et les attributs de son exemplaire et étant fournies par un dépôt de métadonnées (115) pour accéder à des données de l'exemplaire stocké dans la persistance des données (130) ;
l'identification (320), dans une persistance des métadonnées (116) étant une table de base de données du dépôt de métadonnées (115), des métadonnées d'extensions stockées dans une rangée de la persistance des métadonnées (116) qui sont associées au modèle objet et au client ;
l'identification (330), dans la persistance des métadonnées (116) étant une table de base de données du dépôt de métadonnées (115), de métadonnées indépendantes du client du modèle objet stockées dans une rangée de la persistance des métadonnées (116) ;
la fusion (340) des métadonnées indépendantes du client et des métadonnées d'extensions associées au client pour créer un modèle objet fusionné en superposant les métadonnées d'extensions identifiées aux métadonnées indépendantes du client identifiées pour remplacer des portions des métadonnées indépendantes du client par des portions correspondantes des métadonnées d'extensions où les portions diffèrent et pour ajouter des portions des métadonnées d'extensions pour lesquelles il n'existe pas de métadonnées indépendantes du client identifiées ; et
l'accès (350) à l'exemplaire du modèle objet à partir de la persistance des données (130) sur la base du modèle objet fusionné correspondant pour l'exemplaire,
dans lequel, pour chaque rangée dans la persistance des métadonnées (116), une valeur de client « 000 » indique des métadonnées indépendantes du client, et une valeur de client autre que « 000 » indique des métadonnées d'extensions associées au client spécifié par la valeur de client de telle sorte que les métadonnées d'extensions du client sont séparées des métadonnées d'extensions d'un autre client et des métadonnées indépendantes du client dans la persistance des métadonnées (116).

2. Procédé selon la revendication 1, comprenant également le stockage du modèle objet fusionné dans un tampon de métadonnées d'exécution.

3. Système, comprenant :
un dépôt de métadonnées (115) ;
une mémoire persistante pour stocker des exemplaires d'une pluralité de modèles objets ;
code de programme exécutable qui, quand il est chargé et exécuté dans le système, amène le système à effectuer des opérations selon un procédé de l'une quelconque des revendications précédentes.
